Europäisches Patentamt

European Patent Office

Office européen des brevets

(11) Publication number: **0 155 612**

**B1**

# EUROPEAN PATENT SPECIFICATION

(45) Date of publication of patent specification: **27.12.90**

(21) Application number: **85102720.1**

(22) Date of filing: **09.03.85**

(51) Int. Cl.⁵: **B 29 C 47/00,** B 29 D 5/10 // B29L5:00

(54) Process for making cast thermoplastic film with integral closures.

(30) Priority: **21.03.84 US 591662**

(43) Date of publication of application:
**25.09.85 Bulletin 85/39**

(45) Publication of the grant of the patent:
**27.12.90 Bulletin 90/52**

(84) Designated Contracting States:
**BE CH DE FR GB IT LI NL SE**

(56) References cited:
**EP-A-0 025 656**
**EP-A-0 114 373**
**FR-A-1 342 438**
**FR-A-1 438 229**
**GB-A- 761 784**
**US-A-3 356 556**
**US-A-3 380 481**
**US-A-3 945 403**
**US-A-4 017 227**
**US-A-4 295 919**

(73) Proprietor: **THE DOW CHEMICAL COMPANY**
**2030 Dow Center Abbott Road P.O. Box 1967**
**Midland Michigan 48640-1967 (US)**

(72) Inventor: **Behr, Raymond Douglas**
**4511 Huron Court**
**Midland Michigan 48640 (US)**
Inventor: **Zieke, Larry Michael**
**1108 Airfield**
**Midland Michigan 48640 (US)**

(74) Representative: **Sternagel, Hans-Günther, Dr.**
**Patentanwälte Dr. Michael Hann Dr. H.-G.**
**Sternagel Sander Aue 30**
**D-5060 Bergisch Gladbach 2 (DE)**

Courier Press, Leamington Spa, England.

## Description

This invention relates to an apparatus and a method of in-line forming of integral fastener elements with film or sheet stock to be made into bags or other containers which are reclosable by the fastener elements, according to the preamble of the independent claims 1 and 4 and such a film according to the preamble of the independent claim 8. It is particularly directed to a cast process wherein a single film and sheet carries more than one pair of fastener elements, as disclosed in US—A—4,295,919. In US—A—4,295,919, a pair of male fastener elements or profiles are located in a central section of the sheet and a pair of female fastener elements or profiles are located adjacent opposite edges of the sheet. In some cases, the film between the center two fastener elements is thickened. When the film is slit between the elements fastener, the thickened film portions become the lips or marginal edges that are manually grasped to open the bag. These marginal edges resist tearing when the bag is opened. When the film is thickened between the fastener elements, the converge as they travel from the die to the chill roll. The lateral translation of each center fastener element causes it to tip. To compensate for this tipping fastener elements in the past have been pre-tipped at the die.

Earlier methods designed at splitting the film web to accomplish the same purpose were not satisfactory, which slitting of the film web occurring away from the die. Such remote splitting permitted the two center fastener elements to move together as they travelled from the die to the chill roll in response to lateral forces associated with lateral stress. This lateral movement of the fasteners in turn caused them to tip.

The pre-tipping solution has not been fully satisfactory in that the degree of pre-tipping cannot accurately be anticipated, particularly with varying resins and process conditions, and cannot be adjusted responsively once the pre-tipping attitude is die cut into the die-plates. Failure to have the male profile in the proper position or attitude can result in unsatisfactory interlocking performance of the male and female fastener elements with each other to form the closure. Also, in such an arrangement, particularly where there is a base under a profile, a thinning of the film occurs adjacent the profile, which could result in unwanted film tearing.

It is the object of the invention to provide an apparatus for forming integral thermoplastic fastener profiles on a cast extrusion film and a method of its use.

This object is attained by an apparatus for an apparatus for forming integral thermoplastic fastener profiles on a cast extrusion film said apparatus comprising an extrusion die having an extrusion channel ending in extrusion die lips, said die lips extruding the film and integrally therewith more than one pair of fastener profiles formed on the film, characterized in that means are provided immediately adjacent said die lips for splitting the film along a line between adjacent pairs of fastener profiles to form the film into separate sheets of film for each pair of fastener profiles.

The solution of the object includes a process for forming thermoplastic fastener profiles on a cast extrusion film or sheet in a substantially erect disposition by integrally extruding the film and fastener profiles from a die lip, said film having a width sufficient to carry two or more pairs of fastener profiles, characterised by placing a splitter means immediately adjacent to said die lips to split the film between adjacent pairs of profiles to form a film having substantially erect profiles.

This method results in a film containing integrally extruded reclosable fastener profiles wherein each of said profiles is substantially perpendicular to the planer surface of the film and contains a base portion which is thicker than said film adjacent to the base portion, characterized in that at least one of the profiles includes ribs on either side thereof, said ribs are perpendicular to the film and the edge of the film towards the outside of the profile and its ribs is thickened in a manner similar to the edge adjacent the outer edge of profile.

Accordingly, integral fastener elements are extruded on a film such that the film will have thickened marginal edges and such that the profiles on the film stand upright so that when formed into a container, the profiles will readily interlock and disengage when desired. In experimenting to avoid distortion of the profiles and thin edges along the sides of the film, in instances where a single extruder die is extruding a plurality of pairs of profiles on a single sheet, it was discovered that splitting of the sheet adjacent the die in the machine direction between pairs of profiles will essentially eliminate the distortion and thin edges. It was found that by doing so, the profiles nearer the center of the sheet will be similarly disposed as those towards the edges, and the edges of the sheet will be of a similar thickness adjacent each profile of each closure pair. This is particularly advantageous where there is a base under the profiles. The problem of thinning of the film adjacent the base is also substantially obviated by this procedure.

The splitting means is located centrally of said film where two pairs of fastener profiles are extruded in order to split the sheet between the two pairs of fastener profiles. The die lips are formed so that the thickness of the film beneath at least one fastener profile of each of said pair of profiles is thicker than the film adjacent thereto. Preferably a thickened ridge is formed along each edge of said film and the portion of the film below at least one of the profiles forms a profile base which is thicker than the adjacent portion of the film. Said profiles may be similar profiles. Preferably at least one of the profiles is a male profile having ribs extruded along adjacent sides of said male profile. The thickened edges of the film may be three times as thick as the film adjacent to the profiles. The film according to the invention can be used to form a reclosable container.

The invention will now be explained with particular reference to the accompanying drawings in which:

Figure 1 is an overhead view of an unslit web illustrating the current practice in the prior art;

Figure 2 is an enlarged cross-sectional view of Figure 1 taken along the line 2—2 with portions broken away;

Figure 3 is a plane view of a web split in accordance with the process of the present invention; and

Figure 4 is an enlarged cross-sectional view of Figure 3 taken along the line 4—4 representing one side of the split web of Figure 3.

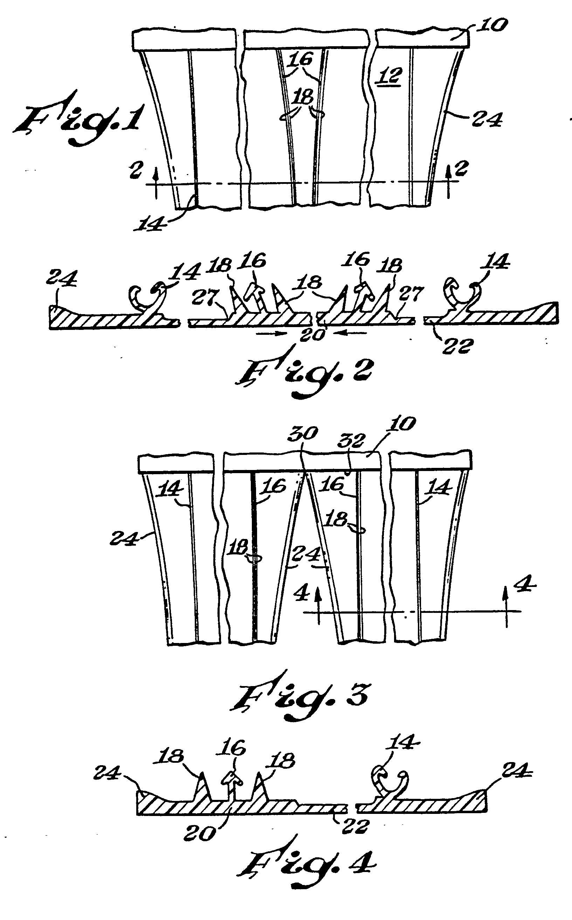

Prior to the present invention, it was common to extrude a film or sheet 12 from a standard die 10, as shown in Figure 1, of a sufficient width to provide for two reclosable containers each having a female profile 14 and a male profile 16, as for example, illustrated in Figure 3 of UA—A—4,295,919. However, in the present invention, the male profiles are provided with additional ribs 18 on each side thereof and the film portions 20 below the male and female profiles are thicker, by a factor of about two or more, than the film poriton 22 which comprises a major portion of the width of the film. The thickened portions 20 can be obtained by profiling the film extrudate or by laying a separate base layer on the film, or by extruding an extra base layer with the profile itself. Another thickened portion 24 is formed at the edge of the film.

As can be more clearly seen from Figure 2, the primary difficulty with the prior extrusion methods is that there is a considerable tipping or tilting of the male profiles 16 as well as their associated ribs 18 when included. The male profiles and ribs are slanting in a direction toward the outside edges 24 of the film. It is believed that this slanting of the male profiles and ribs is caused by a lateral translation of the bases of the two male profiles (moving toward one another as illustrated by the arrows in Figure 2) and by lateral forces associated with a lateral stress in the film set up as a result of the various thicknesses in the extruded film at portions 20 and 22. For example, if the film portion 20 is twice as thick as the film portion 22, then the lateral forces or the necking-down forces during extrusion would be twice as great at the center as at the edges. To attain a balance of forces, the bases move toward one another causing the tips of the profiles to slant towards the film edges. This tipping of the male profiles and ribs will make it more difficult to interengage the male profiles with the female profiles when the film is formed into a container. There can actually be a total failure to form an interlocking engagement between the male profile 16 and the adjacent ribs 18 and the female profile 14 if the slanting of the male profile and ribs is severe enough.

Because of the lateral shifting of the base and the accompanying lateral stresses, thin spots or depressions 27 also occur where the thicker portions 20 of the film join the thinner portions 22 of the film. The thin spots or depressions 27 can be less than half the thickness of film portions 22. This thinning-down of the film at the depressions 27 can form a point of weakness in the film which can subject the container to tearing at this point.

To compensate for such tipping or tilting of the male profile and ribs, the die plates (not shown) within the die 10 were experimentally cut so as to be pre-tipped or tilted in a direction opposite to the anticipated male profile and rib tilt by as much as about 22 degrees. This, however, did nothing to prevent the formation of thin spots 27. The solution did work somewhat to obviate the tipping problem, but it was found that there was often overcompensation or undercompensation and that it would be generally rare when the profiles and the associated ribs, particularly when used in that combination, would be in the most desirable perpendicular attitude. Part of this would be due to different operating conditions and different materials. Also when the film was split later in the process, the film edges adjacent to the male profiles and adjoining ribs 18 would remain at about the same as the film thickness 20 and would not be thickened noticeably.

These edges would be thinner than the edges 24 of the film outside of the profiles 14. It is normally desirable to have both edges of the film of a similar thickened disposition so that tearing is minimized when the edges of the film are handled.

It has now been discovered that if the film is split immediately after it exits the die, as illustrated in Figure 3, nearly all of the prior problems that were experienced, as enumerated above, were substantially eliminated. This splitting of the web can be accomplished by putting a deckle or wire at exit point 30 across the height of the die lips 32. To achieve maximum beneficial effect, splitting of the film should be at or closely adjacent to the die lips 32. With such splitting, the length of the die lips is increased to provide a total film width equivalent to product made by the prior practice.

As can be seen from Figure 4, the resulting disposition of the profile 16 and the ribs 18 is that they are fully erect (perpendicular to the film) and thus have no tilt. Also, the depression 27 is substantially minimized so that there is no significant adverse effect on the structural strength of the container itself. In addition, the edge 24 of the film towards the outside of the profile 16 and its ribs 18, is thickened in a manner similar to the edge 24 adjacent the outer edge of profile 14, thus giving the film balance and avoiding notching tendencies on either edge of the film forming a container. The edges 24 can be typically about three times as thick as portion 22 of the film.

As is apparent from the description and drawings above, a substantially improved product can be made by employing the concepts of this present invention by splitting the film immediately adjacent the die lips. The film or sheet stock or fastener profiles can be made of various other resin materials and the size, color and shape of the components can be varied; the number of fastener members extruded onto a film or sheet face can vary; and the actual design and configuration of the container can vary from flexible bags to rigid containers and equivalent hardware can be substituted.

## Claims

1. An apparatus for forming integral thermoplastic fastener profiles (14, 16) on a cast extrusion film (12) said apparatus comprising an extrusion die (10) having an extrusion channel ending in extrusion die lips (32), said die lips (32) extruding the film (12) and integrally therewith more than one pair of fastener profiles (14, 16) formed on the film (12), characterized in that means are provided immediately adjacent said die lips (32) for splitting the film (12) along a line between adjacent pairs of fastener profiles (14, 16) to form the film (12) into separate sheets of film (12) for each pair of fastener profiles (14, 16).

2. The apparatus of Claim 1 wherein said splitting means is located centrally of said film (12) where two pairs of fastener profiles (14, 16) are extruded in order to split the sheet (12) between the two pairs of fastener profiles (14, 16).

3. The apparatus of Claim 1 or 2 wherein the die lips (32) are formed so that the thickness of the film (20) beneath at least one fastener profile (14, 16) of each said pair of profiles (14, 16) is thicker than the film (22) adjacent thereto.

4. A process of forming thermoplastic fastener profiles (14, 16) on a cast extrusion film (12) or sheet in a substantially erect disposition by integrally extruding the film (12) and fastener profiles (14, 16) from a die lip (32), said film (12) having a width sufficient to carry two or more pairs of fastener profiles (14, 16), characterized by placing a splitter means immediately adjacent to said die lips (32) to split the film (12) between adjacent pairs of profiles (14, 16) to form a film (12) having substantially erect profiles (14, 16).

5. The process of claim 4, wherein a thickened ridge (24) is formed along each edge of said film (12) and wherein the portion (20) of the film below at least one of the profiles (14, 16) forms a profile base which is thicker than the adjacent portion (22) of the film (12).

6. The process of claim 4 or 5, wherein said profiles (14, 16) are similar profiles.

7. The process of claims 4 or 5 wherein at least one of the profiles is a male profile (16) having ribs (18) extruded along adjacent sides of said male profile (16).

8. A film (12) containing integrally extruded reclosable fastener profiles (14, 16) wherein each of said profiles (14, 16) is substantially perpendicular to the planer surface of the film (12) and contains a base portion which is thicker than said film (12) adjacent to the base portion, characterized in that at least one of the profiles (14, 16) includes ribs (18) on either side thereof, said ribs (18) are perpendicular to the film (12) and the edge (24) of the film (12) towards the outside of the profile (16) and its ribs (18) is thickened in a manner similar to the edge (24) adjacent the outer edge of profile (14).

9. The film (12) of claim 8 wherein the thickened edges (24) of the film (12) are three times as thick as the film (12) adjacent of the profiles (14, 16).

10. Use of the film (12) of claims 8 or 9 to form a reclosable container.

## Patentansprüche

1. Vorrichtung zum Ausbilden von angeformten, thermoplastischen Verschlußprofilen (14, 16) auf einem gußextrudierten Film (12) mit einer Extruderdüse (10) mit einem in Extrusionsdüsenlippen (32) endenden Extrusionskanal, wobei die Düsenlippen (32) den Film (12) und damit auf dem Film (12) angegossene mehr als ein Paar Verschlußprofile (14, 16) extrudieren, dadurch gekennzeichnet, daß Einrichtungen unmittelbar neben den Düsenlippen (32) vorhanden sind, um den Film (12) entlang einer Linie zwischen benachbarten Paaren von Verschlußprofilen (14, 16) zu teilen, um den Film (12) in zwei getrennte Folienbahnen für jedes Verschlußprofilpaar (14, 16) aufzutrennen.

2. Vorrichtung nach Anspruch 1, dadurch gekennzeichnet, daß die Einrichtung zum Teilen zentral zum Film (12) angeordnet ist, wo zwei Paare von Verschlußprofilen (14, 16) extrudiert werden, um die Folie (12) zwischen zwei Paaren Verschlußprofilen (14, 16) aufzuteilen.

3. Vorrichtung nach Anspruch 1 oder 2, dadurch gekennzeichnet, daß die Düsenlippen (32) so ausgebildet sind, daß die Dicke des Films (20) unter mindestens einem Verschlußprofil (14, 16) jedes Paares der Profile (14, 16) dicker ist als der Film (22) neben denselben.

4. Verfahren zum Ausbilden von thermoplastischen Verschlußprofilen (14, 16) auf einem gußextrudierten Film (12) oder Folie in im wesentlichen aufrechter Stellung durch Zusammenextrudieren von Film (12) und Verschlußprofilen (14, 16) aus einer Düsenlippe (32), wo der Film (12) ausreichend breit ist, um zwei oder mehrere Paare von Verschlußprofilen (14, 16) aufzunehmen, gekennzeichnet durch Anordnen einer Aufteileinrichtung unmittelbar neben den Düsenlippen (32), um den Film (12) neben benachbarten Paaren von Profilen (14, 16) zu teilen unter Ausbildung eines Filmes (12), der im wesentlichen aufrechtstehende Profile (14, 16) aufweist.

5. Verfahren nach Anspruch 4, dadurch gekennzeichnet, daß eine verdickte Leiste (24) entlang jeder Kante des Filmes (12) ausgebildet wird und Teil (20) des Films unter mindestens einem der Profile (14, 16) eine Profilbasis ausbildet, die dicker ist als der benachbarte Teil (22) des Filmes (12).

6. Verfahren nach Anspruch 4 oder 5, dadurch gekennzeichnet, daß die Profile (14, 16) identische Profile sind.

7. Verfahren nach Anspruch 4 oder 5, dadurch gekennzeichnet, daß mindestens eines der Profile ein Steckprofil (16) mit seitlich daneben angeordneten, extrudierten Rippen (18) ist.

8. Folie (12) mit integrierten, extrudierten, wiederverschließbaren Verschlußprofilen (14, 16), wobei sich jedes der Profile (14, 16) im wesentlichen senkrecht zur flachen Oberfläche der Folie (12) erstreckt und ein Basisteil aufweist, das dikker ist als die Folie (12) neben dem Basisteil, dadurch gekennzeichnet, daß mindestens eines der Profile (14, 16) auf jeder Seite Rippen (18) aufweist, wobei die Rippen (18) senkrecht zur Folie (12) und die Kante (24) der Folie (12) auf der Außenseite des Profiles (16) sind und die Rippen (18) in gleicher Weise wie die Kante (24) neben der Außenkante der Profils (14) verdickt sind.

9. Folie (12) nach Anspruch 8, dadurch gekennzeichnet, daß die verdickten Kanten (24) der Folie (12) dreimal so dick sind wie die Folie (12) neben den Profilen (14, 16).

10. Verwendung der Folie (12) nach Ansprüchen 8 oder 9, um einen wiederverschließbaren Behälter auszubilden.

**Revendications**

1. Appareil pour former des profilés thermoplastiques de fixation d'un seul tenant (14, 16) sur un film obtenu par extrusion (12), ledit appareil comprenant une filière d'extrusion (10) possédant un canal d'extrusion se terminant dans des lèvres de filière d'extrusion (32), lesdites lèvres de filière (32) extrudant le film (12) et, d'un seul tenant avec celui-ci, plus d'une paire de profilés de fixation (14, 16) formées sur le film (12), caractérisé en ce que des moyens sont disposés immédiatement an voisinage desdites lèvres de filière (32) pour diviser le film (12) le long d'une ligne entre des paires adjacentes de profilés de fixation (14, 16) pour former le film (12) en feuilles séparées de film (12) pour chaque paire de profilés de fixation (14, 16).

2. Appareil selon la revendication 1, dans lequel ledit moyen de séparation est situé au centre dudit film (12) où deux paires de profilés de fixation (14, 16) sont extrudées pour séparer le feuille (12) entre les deux paires de profilés de fixation (14, 16).

3. Appareil selon la revendication 1 ou 2, dans lequel les lèvres de filière (32) sont formées de manière que l'épaisseur du film (20) au-dessous au moins d'un profilé de fixation (14, 16) de chacune desdites paires de profilés (14, 16) est supérieure au film (22) qui lui est adjacent.

4. Procédé pour former des profilés de fixation (14, 16) en thermoplastique sur un film d'extrusion (12) ou une feuille obtenue per extrusion dans une position sensiblement en saillie, en extrudant d'un seul tenant le film (12) et les profilés de fixation (14) à partir d'un lèvre de filière (32), ledit film possédant une largeur suffisante pour porter deux paires de profilés de fixation (14, 16) ou davantage, caractérisé par la mise en place d'un moyen de séparation immédiatement adjacent auxdites lèvres de filière (32) pour séparer le film (12) entre des paires adjacentes de profilés (14, 16) pour former un film (12) possédant sensiblement des profilés en saillie (14, 16).

5. Procédé selon la revendication 4, dans lequel une nervure épaissie (24) est formée le long de chaque port dudit film (12) et dans lequel la partie (20) du film au-dessous d'au moins l'un des profilés (14, 16) forme une base de profilé qui est plus épaisse que la partie adjacente (22) du film (12).

6. Procédé selon la revendication 4 ou 5, dans lequel lesdits profilés (14, 16) sont das profilés similaires.

7. Procédé selon la revendication 4 ou 5, dans lequel au moins l'un des profilés est un profilé mâle (16) possédant des nervures (18) extrudées le long de côtés adjacents dudit profilé mâle (16).

8. Film (12) contenant des profilés de fixation (14, 16) extrudés d'un seul tenant, qui peuvent être refermés, dans lequel chacun desdits profilés (14, 16) est sensiblement perpendiculaire à la surface plane du film (12) et contient une partie de base que est plus épaisse que ledit film (12) près de la partie de base, caractérisé en ce que au moins l'un des profilés (14, 16) comprend des nervures (18) sur l'un de ses côtés, lesdites nervures (18) sont perpendiculaires au film (12) et le bord (24) du film (12) vers l'extérieur du profilé (16) et ses nervures (18) est épaissi d'une manière semblable au bord (24) adjacent au bord extérieur du profilé (14).

9. Film (12) selon la revendication 8, dans lequel les bords épaissis (24) du film (12) sont d'une épaisseur égale à trois fois celle du film (12) adjacent au profilé (14, 16).

10. Utilisation du film (12) selon les revendications 8 ou 9 pour former un récipient qui peut être refermé.

*Fig.1*

*Fig.2*

*Fig.3*

*Fig.4*

1